# EUROPEAN PATENT SPECIFICATION

(11) **EP 1 961 516 B1**
(45) Date of publication and mention of the grant of the patent: **31.03.2010**
(21) Application number: 06833131.3
(22) Date of filing: 22.11.2006
(51) Int. Cl.: B23Q 3/00

(54) **CLAMP DEVICE AND CLAMPING SYSTEM USING SUCH DEVICE**
KLEMMVORRICHTUNG UND SOLCH EINE VORRICHTUNG VERWENDENDES KLEMMSYSTEM
DISPOSITIF DE SERRAGE ET SYSTEME DE SERRAGE L UTILISANT

(30) Priority: 28.11.2005 JP 2005376357
(43) Date of publication of application: 27.08.2008
(73) Proprietor: Kosmek Ltd., Hyogo 651-2241 (JP)
(72) Inventor: YONEZAWA, Keitaro, Kobe-shi Hyogo 651-2241 (JP); YOSHIMURA, Gaku, Kobe-shi Hyogo 651-2241 (JP); HARUNA, Yosuke, Kobe-shi Hyogo 651-2241 (JP)
(74) Representative: Horton, Andrew Robert Grant
(86) International application number: PCT/JP2006/323309
(87) International publication number: WO 2007/060986

(56) References cited:
- WO-A1-2004/067224
- JP-A- 2006 231 501

## Description

The present invention relates to a clamping apparatus for fixing a movable block such as a work pallet or a workpiece to a reference block such as a table of a machine tool, and further relates to a clamping system using the clamping apparatus.
A known clamping apparatus is described in Japanese patent publication No. 3550010. The document describes an apparatus in which a tapered outer peripheral surface at an upper portion of a pull rod makes an engagement with an inner peripheral surface of an annular collet from above, and the collet and the pull rod are arranged to be radially movable with respect to a housing. When the pull rod is lowered with respect to the collet, which is urged upward by a pressing spring, the collet diametrically expands to come into close contact with an engagement hole of a workpiece, and the workpiece is driven via the collet to descend.

The known apparatus has only a function of fixing a workpiece, but does not have a function of positioning the workpiece. Therefore, when employing such an apparatus it is necessary to install in addition an exclusive positioning apparatus. As a result, the clamping system is complicated in its structure, and made large in size.
An object of the present invention is to provide a clamping apparatus with a positioning function and a clamping system utilizing the apparatus.

The document WO2004/067224-A1 discloses a clamping apparatus which clamps a movable block having a socket hole to a reference block, comprising:
a centre hole provided in the reference block so as to face the socket hole;
a rigid sleeve supported by the reference block axially movably within a predetermined range and including an axially extending cylindrical hole, a portion of the sleeve projecting further towards a leading end than the centre hole and inserted into the socket hole;
an output member inserted into the cylindrical hole of the rigid sleeve, the output member being connected to a clamping member disposed so as to be inserted into the socket hole;
an advancing means for pressing the rigid sleeve towards the leading end; and
a driving means for moving the output member towards a base end, the output member moving the clamping member towards the base end against the advancing means and radially-outwardly for locking.

Relative to that document the invention according to claim 1 is **characterised in that**:
the clamping member is provided on the projecting portion of the sleeve;
the centre hole has a tapered inner surface narrowing towards the base end;
the rigid sleeve includes a tapered outer surface making a tapering engagement with the tapered inner surface of the centre hole;
and the output member makes the tapered outer surface of the rigid sleeve form a tapering engagement with the tapered inner surface of the centre hole.

### Brief Description of the Drawings

Fig. 1 is a schematic view illustrating a principle of a clamping system utilizing the present invention, and a traverse cross-sectional view of the clamping system.
Fig. 2A is a cross section corresponding to a section taken along the line 2A-2A of Fig. 1 or Fig. 2B, illustrating a first embodiment of a first clamping apparatus of the clamping system. FIG. 2B is a plan view of the clamping apparatus.
Fig. 3A is a substantial part enlarged view of Fig. 2A, illustrating a release state of the clamping apparatus. Fig. 3B is a view similar to Fig. 3A, illustrating a locking start state of the clamping apparatus.
Fig. 4A is a view similar to Fig. 3A, illustrating a half-locked state of the clamping apparatus. Fig. 4B is a view similar to Fig. 3A, illustrating a completely locked state of the clamping apparatus.
Fig. 5A to Fig. 5C illustrate an exemplary variation of the first clamping apparatus. Fig. 5A is a view similar to Fig. 3A. Fig. 5B is a section taken along the line 5B-5B of Fig. 5A. Fig. 5C is a section taken along the line 5C-5C of Fig. 5A.
Fig. 6A and Fig. 6B illustrate a second clamping apparatus of the clamping system. Fig. 6A is a view similar to Fig. 5A, illustrating a section taken along the line 6A-6A of Fig. 6B. Fig. 6B is a section taken along the line 6B-6B of Fig. 6A. Fig. 6C is a view similar to Fig. 6B, illustrating a first exemplary variation of the second clamping apparatus. Fig. 6D is a view similar to Fig. 6B, illustrating a second exemplary variation of the second clamping apparatus.
Fig. 7A and Fig. 7B illustrate a third clamping apparatus of the clamping system. Fig. 7A is a partial view similar to Fig. 5A. Fig. 7B is a section taken along the line 7B-7B of Fig. 7A.
Fig. 8 is a view similar to Fig. 2A, illustrating a second embodiment of the first clamping apparatus.
Fig. 9A to Fig. 9D illustrate a third embodiment of the first clamping apparatus. Fig. 9A is a cross section corresponding to a section taken along the line 9A-9A of Fig. 9B, illustrating a release state of the clamping apparatus. Fig. 9B is a section in plan view of Fig. 9A. Fig. 9C is a view similar to Fig. 9A, illustrating a lock state of the clamping apparatus. Fig. 9D is a section in plan view of Fig. 9C.

### General Explanation of the Invention

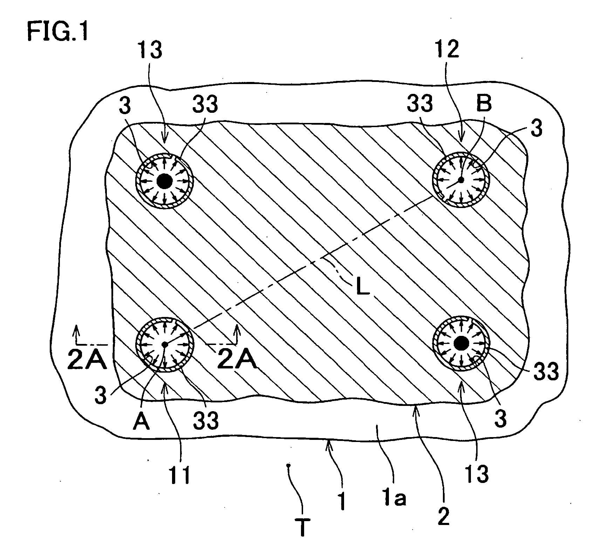

In order to accomplish the objective mentioned above, according to a first aspect of the present invention, for example, as illustrated in Fig. 1 to Fig. 4B, Fig. 6A and Fig. 6B, Fig. 8, or Fig. 9A to Fig. 9D, an apparatus which clamps a movable block 2 having a socket hole 3 to a reference block 1 is constructed as follows.

A centre hole 20 is provided in the reference block 1 so as to face the socket hole 3, and the centre hole 20 has a tapered inner surface 23 narrowing toward a base end. A rigid sleeve 21 is supported by the reference block 1 axially movably within a predetermined range. The rigid sleeve 21 includes a tapered outer surface 27 making a tapering engagement with the tapered inner surface 23 of the centre hole 20, a projecting portion 25, which projects further toward a leading end than the centre hole 20 and is inserted into the socket hole 3, and an axially extending cylindrical hole 21 a.
An advancing means 45 is provided for pressing the rigid sleeve 21 toward the leading. An output member 48 is inserted into the cylindrical hole 21a of the rigid sleeve 21. The output member 48 is connected to a clamping member 33 provided on the projecting portion 25 so as to be inserted into the socket hole 3. A driving means D is provided for moving the output member 48 toward the base end. The output member 48 moves the clamping member 33 towards the base end against the advancing means 45 and radially-outwardly for locking, and makes the tapered outer surface 27 of the rigid sleeve 21 form a tapering engagement with the tapered inner surface 23 of the centre hole 20.
The rigid sleeve 21 is different from a sleeve which can elastically deformed diametrically, for example, as a collet or the like, but means a tubular member having extremely slight elastic deformation.
However, an embodiment in which an annular clamping member such as a collet is elastically deformed to radially expand and radially contract, and an embodiment in which clamping members are arranged circumferentially at intervals radially-outwardly and radially-inwardly and move to radially expand and radially contract, are feasible.
An automatic means utilizing a fluid power actuator or the like and a manual means utilizing screw thrust force or the like are both feasible for the drive means.

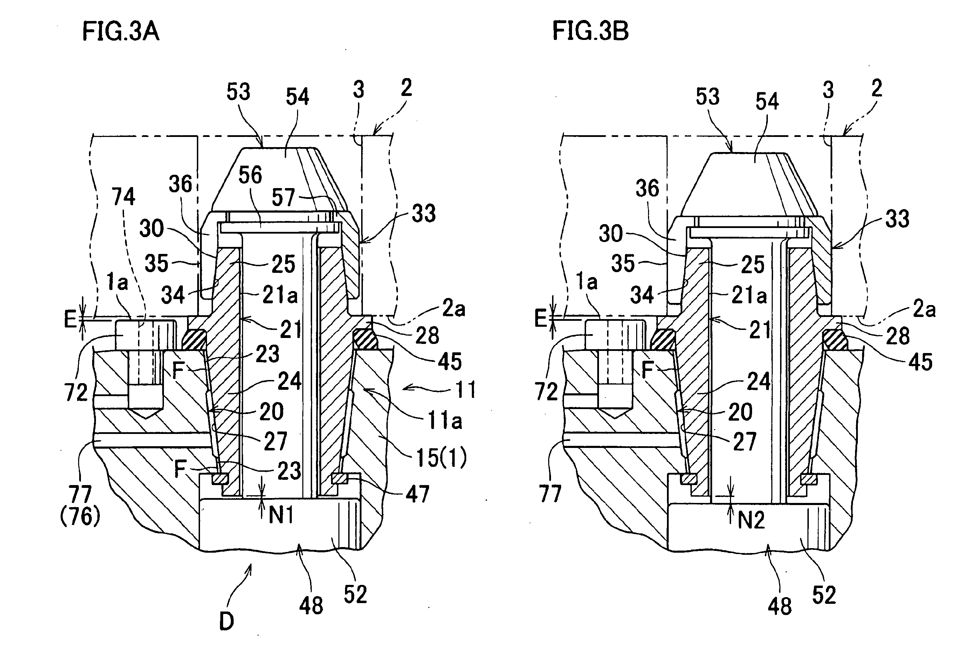

In the release state shown in Fig. 3A, the output member 48 raises the clamping member 33 toward the leading end (upwards in the drawing), and the clamping member 33 is changed to be in a diametrically contracted state. Further, the rigid sleeve 21 is held at a raised position by the advancing means 45.
When the movable block 2 is positioned with respect to the reference block 1, first the movable block 2 is lowered in the release state shown in Fig. 3A, and the socket hole 3 is fitted at the outside of the clamping member 33, and the movable block 2 is received by the reference block 1. Further, at the time of receiving, as illustrated in Fig. 3A, the movable block 2 may be received by the reference block 1 either via another member such as the rigid sleeve 21, or directly by the reference block 1.

As illustrated by Fig. 3B, when the output member 48 is lowered, first the clamping member 33 is caused to expand diametrically (or to move radially-outwardly), to come into contact with the socket hole 3, by means of via the rigid sleeve 21 which is held substantially at the raised position by the advancing means 45.

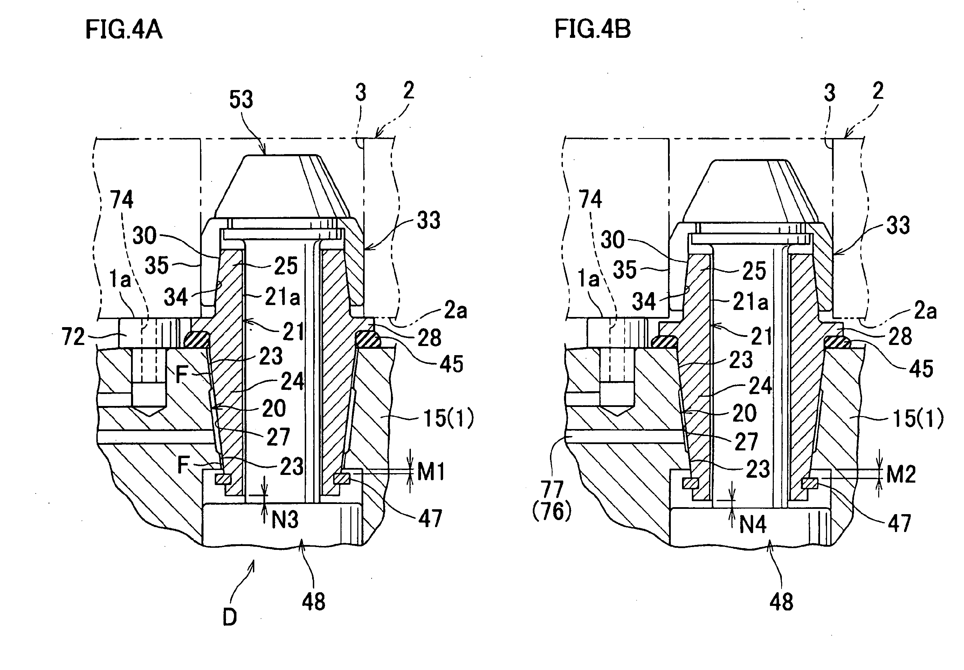

Next, in a half-locked state shown in Fig. 4A, the clamping member 33 diametrically expands further with respect to the rigid sleeve 21, which is pressed upward by the advancing means 45, and the clamping member 33 comes into close contact with an inner peripheral surface of the socket hole 3.

Then, as illustrated in Fig. 4B, the rigid sleeve 21 is lowered against the advancing means 45, and the tapered outer surface 27 of the rigid sleeve 21 makes a tapering engagement with the tapered inner surface 23 of the centre hole 20. Thereby, the rigid sleeve 21 is radially (i.e. horizontally) and axially (i.e. vertically) constrained by the reference block 1 by means of the tapering engagement. The movable block 2 is horizontally positioned with respect to the reference block 1 by means of the rigid sleeve 21 in the constrained state and the clamping member 33 in the close contact state with the socket hole 3. Substantially at the same time, the output member 48 is driven to descend further with respect to the rigid sleeve 21, and the output member 48 presses the movable block 2 downward by means of the clamping member 33. Thereby, the supported surface 2a of the movable block 2 is strongly pressed onto the support surface 1a of the reference block 1.

Since the movable block can be clamped to the reference block after the movable block is positioned with respect to the reference block by the clamping member and the rigid sleeve, a clamping apparatus with a positioning function can be made more simple and compact.
Further, during a locking operation, the tapered outer surface of the rigid sleeve makes a tapering engagement with the tapered inner surface of the centre hole; consequently the rigid sleeve can be integrated with the reference block. Therefore, the rigid sleeve is enhanced in its radial (horizontal) rigidity. As a result, even when great external force such as machining reaction force during a machining process is applied to the movable block, the movable block can be held in a positioned state.
Additionally, since the rigid sleeve is an independent member different from the reference block, it is possible to exchange the rigid sleeve inexpensively and easily when it is worn away. Moreover, since the rigid sleeve is an independent member, design freedom in selection of material, selection of wall thickness, surface treatment, and so on are greater; consequently to the manufacture of the rigid sleeve with high accuracy and high rigidity is facilitated. As a result, it is possible to provide a clamping apparatus which can be used in a maintenance-free manner over a long period of time.

It is preferable to add the following structure to the present invention, for example, as illustrated in Fig. 3A or Fig. 5A or Fig. 9A.
Specifically, a flange portion 28 projects radially-outwardly from the rigid sleeve 21 outside the centre hole 20, and the advancing means 45 is disposed in an annular manner between the flange portion 28 and the reference block 1.
In this case, it is possible to prevent foreign matter such as swarf from intrusion into the reference block by the advancing means. Further, since the preventative means serves as the advancing means as well, the clamping apparatus has fewer components, and the clamping apparatus can be made more simple and compact.

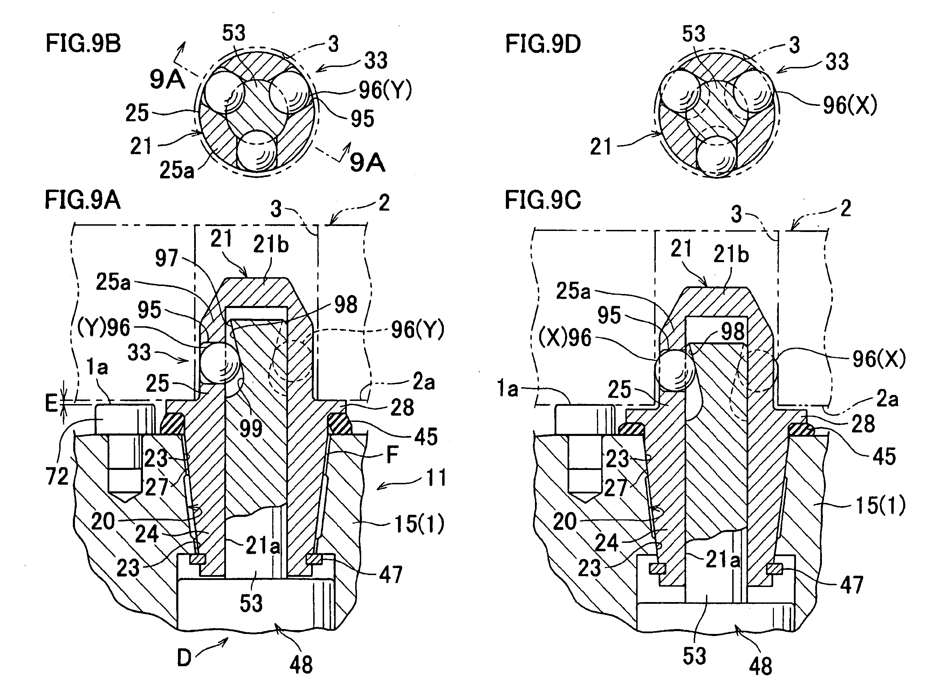

As illustrated in Fig. 3A or Fig. 9A, the annular advancing means 45 is composed of an elastic member for sealing such as rubber or synthetic resin.
It is thereby possible to reliably prevent foreign matter such as swarf from intrusion into the reference block.

It is preferable to add the following structure, for example, as illustrated in Fig. 3A to Fig. 4B.
A flange portion 28 projects radially-outwardly from the rigid sleeve 21 outside the centre hole 20. In a state where the movable block 2 is placed on the flange portion 28, the advancing means 45 presses the movable block 2 to form a seating gap E between a supported surface 2a of the movable block 2 and a support surface 1a of the reference block 1. A detection hole 74 for pressurized fluid for seating confirmation is opened in the support surface 1a.

In this case, since a seating gap is formed in a state where the movable block is spaced from the reference block, and it is possible to cause the seating gap to disappear in a state where the movable block is seated on the reference block, it is possible to distinguish reliably between the spaced state and the seated state for detection.

It is preferable to add the following structure, for example, as illustrated in Fig. 3A to Fig. 4B.
A supply port 76 for pressurized fluid for locking confirmation is provided in the reference block 1. The supply port 76 is connected in communication with an exterior space via a locking gap F between the tapered inner surface 23 and the tapered outer surface 27. The communicative connection between the supply port 76 and the exterior space is shut off when the tapered outer surface 27 makes a tapering engagement with the tapered inner surface 23.
In this case, since a locking gap is formed in a release state, and it is possible to cause the locking gap to disappear in a lock state, it is possible distinguish reliably between the release state and the lock state for detection.

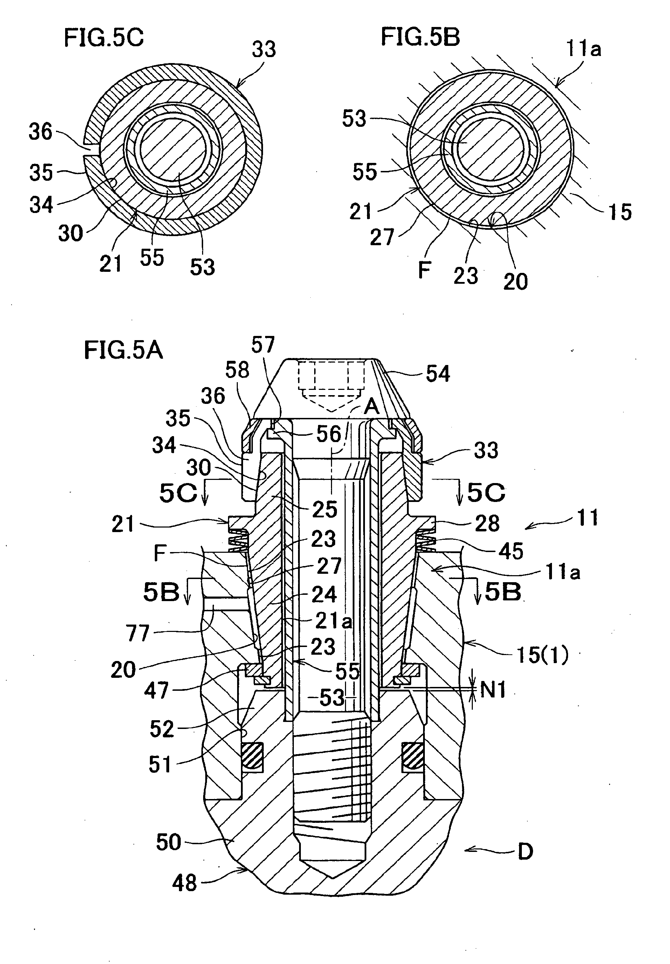

As illustrated in Fig. 3A, or Fig. 5A and Fig. 5B, the tapered outer surface 27 of the rigid sleeve 21 may make a tapering engagement with substantially the whole circumference of the tapered inner surface 23 of the centre hole 20 provided in the reference block 1.

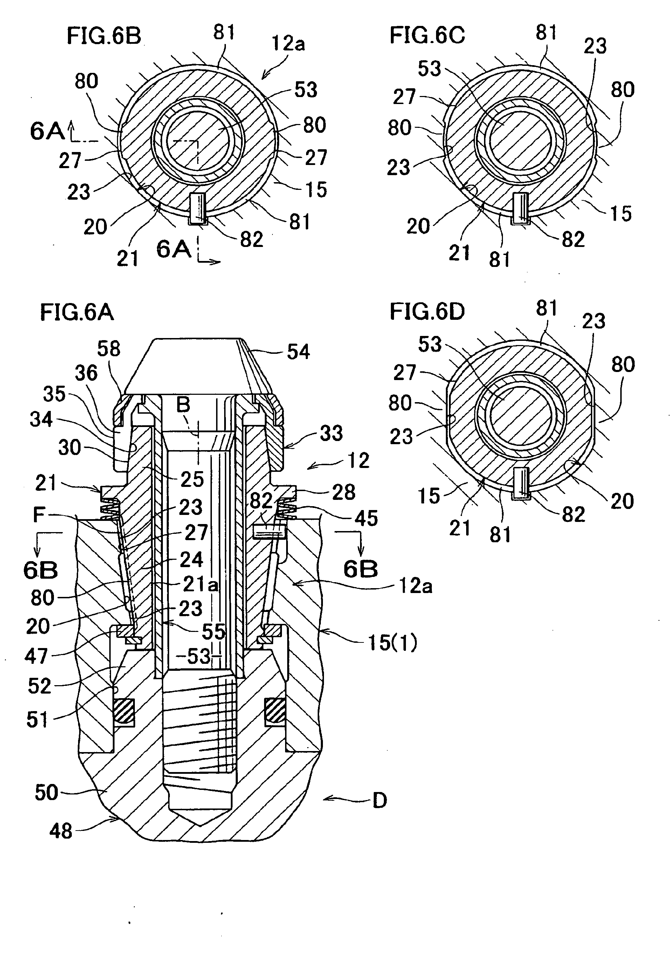

The following structure may be added, for example, as illustrated in Fig. 6A and Fig. 6B, or Fig. 6C or Fig. 6D.
A pair of protruding portions 80, 80 radially facing each other is provided on at least one of an inner periphery of the centre hole 20 provided in the reference block 1 and an outer periphery of the rigid sleeve 21. The tapered inner surface 23 or the tapered outer surface 27 is formed to the respective protruding portions 80. Movement-allowing (i.e. relief) spaces 81, 81 partitioned by the protruding portions 80, 80 are formed to radially face each other between the inner periphery of the centre hole 20 and the outer periphery of the rigid sleeve 21.

As illustrated in Fig. 3A, or Fig. 5A and Fig. 5C, the clamping member 33 may be composed of a diametrically expandable and diametrically contractible collet, and the collet type clamping member 33 may make a wedge-engagement with the the rigid sleeve's leading end projecting portion 25.
In contrast to the known structure mentioned above, since the clamping member makes a wedge-engagement with the rigid sleeve from the leading end side, it is easily possible to cover the wedge-engaged portion from the leading end side. Therefore, it is possible to prevent foreign matter such as swarf from intruding into the wedge-engaged portion. As a result, it is possible to use the clamping apparatus in a maintenance-free manner over a long period of time.

As illustrated in Fig. 9A to Fig. 9D, the clamping member 33 may be composed of a plurality of balls 96 arranged circumferentially at intervals on a peripheral wall of the projecting portion 25 of the rigid sleeve 21, and the output member 48 changes the respective balls 96 to radially-outward engaging positions X.
Further, it is preferable to provide at least three balls 96.

Since the clamping member composed of the balls is arranged inside the peripheral wall of the rigid sleeve, as compared with a structure in which the clamping member is disposed at the outer periphery of the rigid sleeve, a portion to be inserted into the socket hole of the movable block can be made with a small diameter. Therefore, it is possible to provide a clamping apparatus with a simple structure suitable for a small diameter socket hole.
Further, the clamping member composed of the balls can be made to provide a radially-outward movement greater than that of a collet type clamping member. Therefore, it is possible to enlarge a fitting gap between the socket hole of the movable block and the outer peripheral surface of the projecting portion of the rigid sleeve; this makes a fitting operation for the socket hole and the rigid sleeve easier.
In addition, since the clamping member composed of the balls has a high surface pressure, the clamping member can come into strong and close contact with the socket hole while elastically deforming or plastically deforming the socket hole of the movable block; therefore great clamping force can be obtained.

A clamping system may comprise a clamping apparatus, according to any one of the embodiments or may comprise different embodiments of the clamping apparatus..

### Detailed Description

Fig. 1 to Fig. 7B illustrate an embodiment of the present invention, and exemplify that a clamping apparatus in a clamping system for a work pallet.

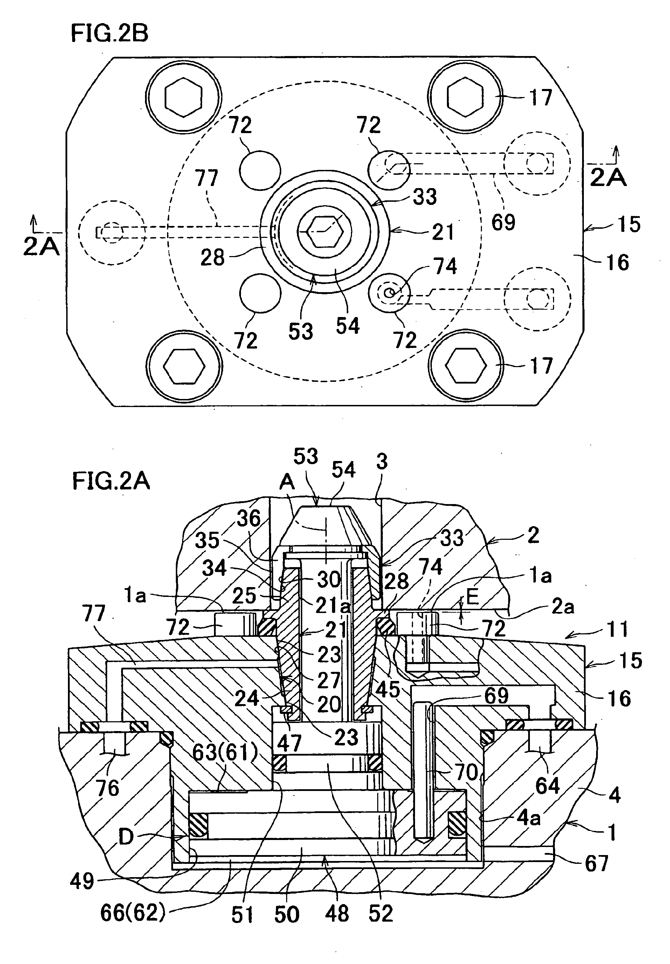

In the embodiment illustrated in Fig. 1 and Fig. 2A, a reference block 1 is placed on a table T of a machine tool, and a supported surface 2a of a work pallet 2, constituting a movable block, is received on a support surface 1a of the reference block 1. Various socket holes 3 each composed of a circular straight hole are opened in the supported surface 2a. Here, four socket holes 3 are illustrated.

The reference block 1 includes a base plate 4 fixed to the table T. For the base plate 4 are provided a first clamping apparatus 11 and a second clamping apparatus 12 each with a positioning functions and a locking function, and two ('third') clamping apparatus 13, 13 with only locking functions; there is one clamping apparatus for each socket hole 3. The first clamping apparatus 11 and the second clamping apparatus 12 are disposed diagonally opposite each other , and the 'third' clamping apparatuses 13, 13 are disposed diagonally opposite each other.

As illustrated in Fig. 1, each clamping apparatus 11, 12, and 13 diametrically expands a respective annular clamping member 33 (described later) radially due to wedge action, and drive clamping member 33 downward into a state where substantially the whole circumference of the peripheral wall of each annular clamping member 33 is in close contact with the respective socket hole 3 to fix the work pallet 2 to the reference block 1.

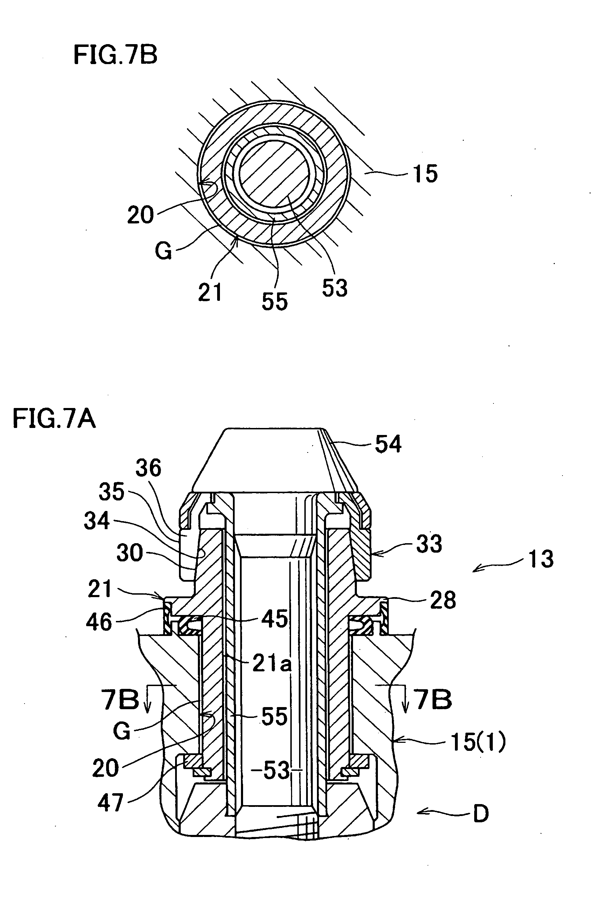

The first clamping apparatus 11 horizontally and vertically positions a rigid sleeve 21 (Fig. 3A), with respect to the reference block 1 at substantially the same time as the close contact of the clamping member 33. Further, the second clamping apparatus 12 positions the rigid sleeve 21 (Fig. 6A) in a horizontal direction substantially perpendicular to a straight line L connecting a reference axis A and a reference axis B, and vertically positions the rigid sleeve 21, thereby preventing the work pallet 2 from rotating about the axis A. Further, each clamping apparatus 13 allows the rigid sleeve 21 to move horizontally with respect to the reference block 1 (refer to Fig. 7A and Fig. 7B), and therefore, each clamping apparatus 13 has only a vertical positioning function, but does not have a horizontal positioning function.

The first clamping apparatus 11 and the second clamping apparatus 12 have the same structure except for differences which will be described later, and basically the following structure is common thereto.

As illustrated in Fig. 1 to Fig. 2B, a lower portion of a housing 15 is fitted into an installation hole 4a of the base plate 4, and a flange 16 of the housing 15 is fixed to a peripheral wall of the installation hole 4a by four tightening bolts 17.
In an upper half portion of the housing 15, a centre hole 20 vertically extending is formed concentrically with the reference axis A (refer to Fig. 1 and Fig. 2A). The centre hole 20 is disposed so as to face the socket hole 3. The rigid sleeve 21 is vertically (axially) movably inserted into the centre hole 20.

The centre hole 20 and the rigid sleeve 21 are constructed as follows as illustrated by the enlarged view of Fig. 3A.
Tapered inner surfaces 23, 23 are respectively formed in an upper portion and a lower portion of an inner periphery of the centre hole 20. Each tapered inner surface 23 narrows downwards (toward a base end direction).
The rigid sleeve 21 has a base portion 24 inserted into the centre hole 20, and a projecting portion 25 capable of being inserted into the socket hole 3. The projecting portion 25 projects further upwards (toward a leading end) than an upper end of the centre hole 20.
A tapered outer surface 27 capable of making a tapering engagement with the tapered inner surface 23 is provided on an outer peripheral surface of the base portion 24. It is preferable for the taper angles of the tapered inner surface 23 and the tapered outer surface 27 to be within a range from approximately 5 degrees to approximately 23 degrees, and it is more preferable that they be be within a range from approximately 10 degrees to approximately 16 degrees.
Further, above the centre hole 20, a flange portion 28 projects radially outwardly from a lower portion of the projecting portion 25. Moreover, a tapered outer peripheral surface 30 which narrows upwards is formed on an upper portion of the projecting portion 25.

A tapered inner peripheral surface 34 of the annular clamping member 33 makes a wedge-engagement with the tapered outer peripheral surface 30 of the rigid sleeve 21 from above. A straight outer peripheral surface 35 of the clamping member 33 is capable of being inserted into the socket hole 3 of the work pallet 2. The clamping member 33 is formed in a collet shape. Specifically, one vertically extending slit 36 is formed in a peripheral wall of the clamping member 33, and thereby the clamping member 33 is diametrically expandable and diametrically contractible;it diametrically contracts due to its own elastic restoring force.

An elastic member (an advancing means) 45 is disposed between an upper portion of a peripheral wall of the centre hole 20 and the flange portion 28. The elastic member 45 is composed of a sealing member such as rubber or synthetic resin, and presses the rigid sleeve 21 upward (toward the leading end). The rigid sleeve 21 is prevented from ascending further than a predetermined distance by a stopper 47 attached at a lower portion of the rigid sleeve 21.

An output member 48 is inserted into the housing 15 to be vertically movable therein. The output member 48 includes a piston 50 hermetically inserted into a cylinder hole 49 in a lower portion of the housing 15, a piston rod 52 which projects upwards from the piston 50 and is hermetically inserted into a rod hole 51, and a connecting rod 53 screwed to the piston rod 52. The connecting rod 53 is inserted into a cylindrical hole 21a of the rigid sleeve 21. An upper flange 57 of the clamping member 33 is fitted radially slidably between an upper flange 56 of the connecting rod 53 and a head portion 54 of the connecting rod 53.

As illustrated in Fig. 2A, a lock means 61 and a release means 62 constituting a drive means D are provided in the housing 15. The lock means 61 is composed of the piston 50 and a lock chamber 63 formed above the piston 50. The lock chamber 63 is connected in communication with a supply and discharge port 64 for pressurized oil for the purpose of locking. The release means 62 is composed of the piston 50 and a release chamber 66 formed below the piston 50. A supply and discharge port 67 for pressurized oil for the purpose of release is connected in communication with the release chamber 66.
A throttle pin 70 is fitted into a vertical passage of the supply and discharge passage 69 for the purpose of locking, and a throttle passage is composed of a fitting gap.

Several circumferentially spaced bosses 72 project upward from an upper surface of the housing 15, and an upper surface of each boss 72 serves as the support surface 1a of the reference block 1.
Further, a seating confirmation means is provided on the first clamping apparatus 11. Specifically, a detection hole 74 is opened in each support surface 1a, and compressed air for detection is supplied to each detection hole 74. Then, when the supported surface 2a of the work pallet 2 is in a contact state with the support surfaces 1a to cause a seating gap E to disappear, the pressure in the detection holes 74 increases. By detecting the increase in pressure by means of a pressure switch or the like, it is possible to confirm that the work pallet 2 is seated on the housing 15.

As illustrated in Fig. 2A and Fig. 3A, a locking confirmation means is provided. Specifically, there are an air supply port 76 for passes through a lateral passage 77 in the housing 15, a locking gap F between the lower tapered inner surface 23 and the tapered outer surface 27, a communicating groove (not shown) provided in the stopper 47, a gap between the cylindrical hole 21 a of the rigid sleeve 21 and an outer peripheral surface of the connecting rod 53, and the slit 36 of the clamping member 33 in the recited order, thereby providing communcation to the exterior . Then, when the tapered outer surface 27 comes into contact with the tapered inner surface 23 to shut off the communicative connection, the pressure in the air supply port 76 increases. By detecting the increase in pressure by means of a pressure switch or the like, it is confirmed that the clamping member 33 and the rigid sleeve 21 have descended to be in a locked state.
Further, although the aforementioned communicating groove (not shown) is described as provided in the stopper 47, the locking gap F between the upper tapered inner surface 23 and the tapered outer surface 27 may instead be connected in communication with the cylindrical hole 21a of the rigid sleeve 21 by way of a communicating passage (not shown).

Substantially the whole circumference of each of the peripheral walls of the annular clamping members 33 of the respective clamping apparatuses 11, 12, and 13 is made to diametrically expand radially-outwardly by the tapered outer peripheral surface 30 of the rigid sleeve 21.
Further, as illustrated in Fig. 2A and Fig. 3A (and Fig. 5B which will be described later), a positioning mechanism 11a of the first clamping apparatus 11 is constructed such that the tapered outer surface 27 of the rigid sleeve 21 is capable of making a tapering engagement with substantially the whole circumference of the tapered inner surface 23 of the centre hole 20.

Fig. 5A to Fig. 5C illustrate an exemplary variation of the first clamping apparatus 11. Fig. 5A is a view similar to Fig. 3A. Fig. 5B is a section taken along the line 5B-5B of Fig. 5A. Fig. 5C is a section taken along the line 5C-5C of Fig. 5A.
In this case, a pipe 55 is arranged between the head portion 54 of the connecting rod 53 and the piston rod 52, and the connecting rod 53 is inserted into the pipe 55. Further, the advancing means 45 is composed of a plurality of vertically laminated conical disc springs. Moreover, an outer periphery of an upper half portion of the collet type clamp 33 is covered with a cover tube 58. The cover tube 58 prevents foreign matter such as swarf from intruding into the rigid sleeve 21 through the slit 36.

As illustrated in Fig. 6A and Fig. 6B, a positioning mechanism 12a of the second clamping apparatus 12 is different in the following structure from the positioning mechanism 11a of the first clamping apparatus 11. Fig. 6A is a view similar to Fig. 5A, illustrating a section taken along the line 6A-6A of Fig. 6B. Fig. 6B is a section taken along the line 6B-6B of Fig. 6A.
A pair of protruding portions 80, 80 radially facing each other is provided on the outer periphery of the rigid sleeve 21, and the tapered outer surface 27 is formed on each protruding portion 80. Then, movement-allowing spaces 81, 81 partitioned by the protruding portions 80, 80 are formed to radially face each other between the inner periphery of the centre hole 20 and the outer periphery of the rigid sleeve 21. Thereby, the rigid sleeve 21 functions so as to eliminate a fitting gap in the facing direction of the protruding portions 80, 80, and on the other hand, the rigid sleeve 21 is allowed to move in a radial direction perpendicular to the facing direction. The reference number 82 in Fig. 6A and Fig. 6B denotes a rotation stopper pin.

Fig. 6C illustrates a first exemplary variation of the positioning mechanism 12a. In this case, a pair of the protruding portions 80, 80 radially facing each other is provided on the inner periphery of the centre hole 20, and the tapered inner surface 23 conforms to each protruding portion 80. A pair of the movement-allowing spaces 81, 81 as well is formed in the same way as in Fig. 6B.

A second exemplary variation of Fig. 6D is that the first exemplary variation of Fig. 6C is modified as follows. Specifically, each of the tapered inner surface 23 and the tapered outer surface 27 is composed of a flat surface instead of a circular surface.

The third clamping apparatus 13 is different in the following structure from the first clamping apparatus 11 as illustrated in Fig. 7A and Fig. 7B.
The both peripheral surfaces of the inner peripheral surface of the centre hole 20 and the outer peripheral surface of the rigid sleeve 21 are formed in a vertically straight manner, and an annular gap G for allowing the rigid sleeve 21 to move radially is provided between the both peripheral surfaces. Thereby, it is possible to accommodate a misalignment between an axis of the socket hole 3 and an axis of the centre hole 20.
Further, a dust seal 46 is installed on an outer periphery of the annular rubber advancing means 45.

In a release state of Fig. 2A and Fig. 3A, pressurized oil in the lock chamber 63 is discharged and pressurized oil is supplied to the release chamber 66. Thereby, the piston 50 raises the annular clamping member 33 *via* the connecting rod 53, and the clamping member 33 is changed to be in a diametrically contracted state. The rigid sleeve 21 ascends in an advancing strok,e the elastic member 45 being an advancing means, and lightly makes a tapering engagement with the clamping member 33 or faces the clamping member 33 with a slight gap.

When the work pallet 2 is positioned with respect to the reference block 1, first, as illustrated in Fig. 1 and Fig. 2A (and Fig. 3A), the work pallet 2 is lowered in the release state mentioned above, and the socket hole 3 is fitted at the outside of the clamping member 33, and the work pallet 2 is received by the flange portion 28 of the rigid sleeve 21. In this state, the seating gap E is formed between the support surfaces 1a and the supported surface 2a. Further, as illustrated in Fig. 3A, the locking gap F is formed between the tapered inner surface 23 and the tapered outer surface 27, and a minute contact gap N1 is formed between an upper end surface of the piston rod 52 and a lower end surface of the rigid sleeve 21.
Further, since the locking gap F is provided as described above, when the socket hole 3 of the work pallet 2 is fitted at the outside of the clamping member 33, it is possible to allow a misalignment between an axis of the socket hole 3 and an axis of the rigid sleeve 21.

Next, the pressurized oil in the release chamber 66 is discharged and pressurized oil is supplied to the lock chamber 63. Then the piston 50 lowers the clamping member 33 *via* the connecting rod 53, and the tapered inner peripheral surface 34 of the clamping member 33 makes a wedge-engagement with the tapered outer peripheral surface 30 of the rigid sleeve 21.

Thereby, as illustrated in Fig. 3B, the clamping member 33 diametrically expands with respect to the rigid sleeve 21, which is held substantially at a raised position by the urging force of the elastic member 45 to come into contact with the socket hole 3. In a locking-start state of Fig. 3B, a contact gap N2 greater than the contact gap N1 of Fig. 3A is formed between the upper end surface of the piston rod 52 and the lower end surface of the rigid sleeve 21.

Next, as illustrated in Fig. 4A, the clamping member 33 diametrically expands while compressing the elastic member 45 downward via the rigid sleeve 21, the clamping member coming into close contact with the socket hole 3. Substantially at the same time, the supported surface 2a of the work pallet 2 comes into contact with the support surfaces 1a of the reference block 1. Then, in a half-locked state shown in Fig. 4A, a descending stroke M1 corresponding to the seating gap E of Fig. 3B is defined above the stopper 47, and a contact gap N3 slightly greater than the contact gap N2 of Fig. 3B is defined between the upper end surface of the piston rod 52 and the lower end surface of the rigid sleeve 21.

Then, as illustrated in Fig. 4B, the clamping member 33 moves while sliding downward along the inner peripheral surface of the socket hole 3, and the clamping member 33 further lowers the rigid sleeve 21 while compressing the elastic member 45. And, when the rigid sleeve 21 descends by a descending stroke M2 corresponding to the advancing stroke, the tapered surface 27 of the rigid sleeve 21 makes a tapering engagement with the tapered inner surface 23 of the centre hole 20.
Thereby, the rigid sleeve 21 is radially (horizontally) and axially (vertically) constrained by the reference block 1 *via* the tapering engagement. Then, the work pallet 2 is horizontally positioned with respect to the housing 15 via the rigid sleeve 21 in the constrained state and the clamping member 33 in close contact with the socket hole 3.

Substantially at the same time, as the output member 48 is driven to descend further with respect to the rigid sleeve 21, the tapered inner peripheral surface 34 of the clamping member 33 makes a strong wedge-engagement with the tapered outer peripheral surface 30 of the rigid sleeve 21 received by the housing 15 and diametrically expands, and the straight outer peripheral surface 35 of the clamping member 33 comes into strong and close contact with the socket hole 3. Then, the connecting rod 53 strongly presses the supported surface 2a of the work pallet 2 into close contact with the support surfaces 1a of the reference block 1 via the clamping member 33.

In a locking completed state shown in Fig. 4B, due to the tapered outer surface 27 of the rigid sleeve 21 making a tapering engagement with the tapered inner surface 23 of the centre hole 20, the pressure in the air supply port 76 for locking confirmation increases, and by detecting the increase pressure, it is possible to confirm the lock state. Further, due to the supported surface 2a coming into contact with the support surfaces 1a, the pressure in the detection holes 74 increases, and by detecting the increase in pressure, it is possible to confirm that the work pallet 2 is seated.

Further, in the release state of Fig. 3A and at the time of locking start of Fig. 3B, the support surfaces 1a and the supported surface 2a may be substantially completely in a contact state with each other. In this case, during the locking movement, the clamping member 33 operates as follows.
After the clamping member 33 comes into close contact with the socket hole 3, the clamping member 33 descends while sliding along the socket 3. Then, as described above, when the tapered outer surface 27 of the rigid sleeve 21 makes a tapering engagement with the tapered inner surface 23, the clamping member 33 comes into strong and close contact with the socket hole 3, and the clamping member 33 presses the work pallet 2 onto the reference block 1.

In parallel with the operations of the first clamping apparatus 11 and the second clamping apparatus 12, the two third clamping apparatuses 13, 13 with only locking functions firmly fix the work pallet 2 to the reference block 1 via the clamping member 33.
To change from the lock state to the release state, as described above, it is only required that the pressurized oil in the lock chamber 63 be discharged and pressurized oil be supplied to the release chamber 66. Thereby, since the piston 50 raises the clamping member 33 *via* the connecting rod 53, and the clamping member 33 diametrically contracts due to its own elastic restoring force, the lock state is released.
Further, during the releasing drive, it is also possible that the contact gap N1 illustrated in Fig. 3A be eliminated, and that the piston rod 52 forcibly press up the rigid sleeve 21.

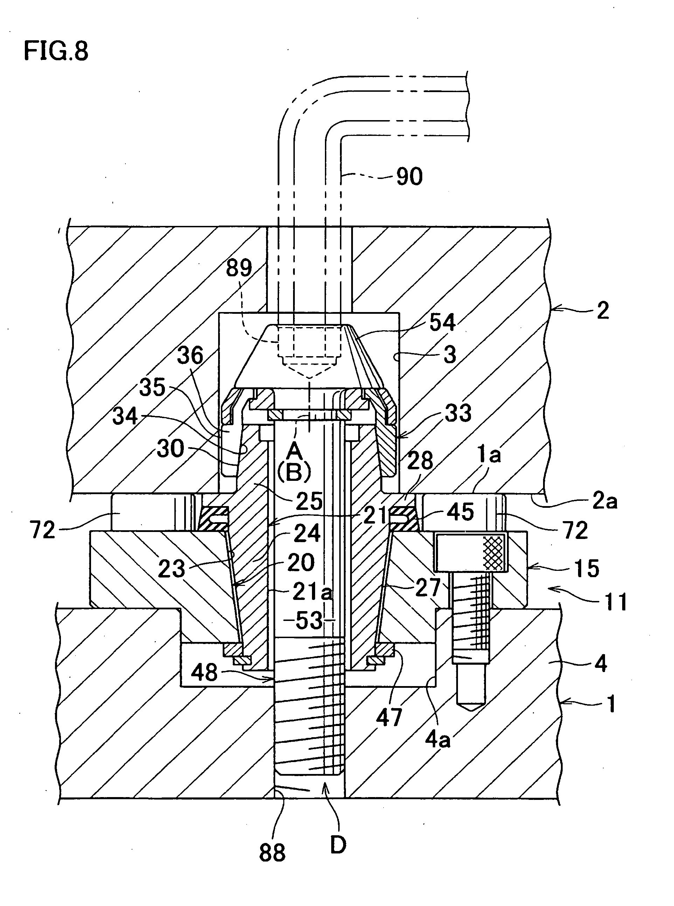

Fig. 8 and Fig. 9A to Fig. 9D respectively illustrate a second embodiment and a third embodiment of the first clamping apparatus 11

Fig. 8 illustrating the second embodiment is a view similar to Fig. 2A. In this case, the drive means D is constructed to be a human-powered type.
The lower portion of the connecting rod 53 is threaded into a screw hole 88 of the base plate 4. During a locking drive, a hexagonal wrench 90 is inserted into an input hole 89 of the head portion 54 of the connecting rod 53, and the connecting rod 53 is rotated in a clockwise direction in plan view. Then, the head portion 54 lowers the clamping member 33 while diametrically expanding the clamping member 33.
Moreover, the elastic member (the advancing means) 45 is formed into a lateral U-shape in section.
Further, the base plate 4 and the housing 15 may be integrally formed, instead of being separately constructed as exemplified.

The clamping member 33 of the respective embodiments may be a clamping member in which a several cicuferential grooves alternately open in an upper surface and a lower surface of its peripheral wall are circumferentially provided, instead of a clamping member in which one slit 36 is provided in the peripheral wall. Moreover, the clamping member 33 may be composed of a plurality of circumferentially spaced separate bodies.
Further, the outer surface of the clamping member 33 may be formed in a serrated manner or in an uneven manner, instead of being formed vertically straight. Further, it is a matter of course that the clamping member 33 is not limited to the above-described structures, but other well-known structures may be employed.

Fig. 9A to Fig. 9D illustrate a third embodiment of the first clamping apparatus 11. Fig. 9A is a cross section corresponding to a section taken along the line 9A-9A of Fig. 9B, illustrating a release state of the clamping apparatus 11. Fig. 9B is a section in plan view of Fig. 9A. Fig. 9C is a view similar to Fig. 9A, illustrating a lock state of the clamping apparatus. Fig. 9D is a section in plan view of Fig. 9C.

The rigid sleeve 21 includes a top wall 21b. Further, three radially extending through holes 95 are formed at circumferentially spaced intervals in a peripheral wall 25a of the projecting portion 25 of the rigid sleeve 21. Radially moveable balls 96 are inserted into the respective through holes 95. The narrowed outer end portions of the through holes 95 prevent the balls 96 from reaching the outside. The plurality of balls 96 serve as the clamping member 33.
A vertically extending grove 97 is formed to correspond to the respective balls 96 in the upper portion (leading end portion) of the connecting rod 53 of the output member 48. The groove 97 has an output surface 98 and a retreating surface 99.

In a release state shown in Fig. 9A and Fig. 9B, the rigid sleeve 21 is held at a raised position by the urging force of the elastic member 45. Further, the output member 48 ascends with respect to the rigid sleeve 21, and the retreating surface 99 faces the balls 96. Therefore, the respective balls 96 are allowed to change to a radially-inward engagement cancellation position Y (here, a state in which the balls 96 have already been changed to the engagement cancellation position Y is illustrated).

When the work pallet 2 is positioned with respect to the reference block 1, first, as illustrated in Fig. 9A, the work pallet 2 is lowered in the release state to make the socket holes 3 be disposed at the outside of the plurality of balls 96, and the work pallet 2 is received by the flange portion 28 of the rigid sleeve 21.
In this state, the seating gap E is formed between the support surfaces 1a and the supported surface 2a, and the locking gap F is formed between the tapered inner surface 23 and the tapered outer surface 27.

During a locking drive, the output member 48 is lowered. Then, the output surface 98 of the connecting rod 53 pushes the balls 96 towards the outside. Thereby, the balls 96 radiallyoutwardly move in the through holes 95 of the rigid sleeve 21, and the balls 96 come into contact with the socket hole 3.

Next, as illustrated in Fig. 9C and Fig. 9D, the balls 96 changed to radially-outward engaging positions X come into close contact with the socket holes 3 while compressing the elastic member 45 downward via the rigid sleeve 21, and substantially at the same time, the supported surface 2a of the work pallet 2 comes into contact with the support surfaces 1a of the reference block 1.
Then, the plurality of balls 96 move while sliding downward along the inner peripheral surface of the socket hole 3 (or, while the balls 96 elastically deform or plastically deform the inner peripheral surface of the socket hole 3), and the plurality of balls 96 further lower the rigid sleeve 21 against the elastic member 45, and the tapered outer surface 27 of the rigid sleeve 21 makes a tapering engagement with the tapered inner surface 23 of the centre hole 20.
Thereby, the rigid sleeve 21 is radially (horizontally) and axially (vertically) constrained by the reference block 1 via the tapering engagement. The work pallet 2 is horizontally positioned with respect to the housing 15 *via* the rigid sleeve 21 in the constrained state and the plurality of balls 96 in a close contact state with the socket hole 3.

Substantially at the same time, as the output member 48 is driven to further descend with respect to the rigid sleeve 21, the plurality of balls 96 come into strong and close contact with the socket hole 3. Then the connecting rod 53 strongly presses the supported surface 2a of the work pallet 2 into close contact with the support surfaces 1a of the reference block 1 via the plurality of balls 96.
Further, the numbers of the through holes 95 and the balls 96 to be installed may be respectively two, or four or more, instead of three.

The respective embodiments and exemplary variations may be modified as follows.
Three or more tapered inner surfaces 23 of the centre hole 20 may be provided, instead of providing vertically two or one thereof.
The tapered inner surface 23 of the centre hole 20 and the tapered outer surface 27 of the rigid sleeve 21 are preferably circular tapered surfaces in section. However, instead thereof, those may be elliptical tapered surfaces, or may be a plurality of sloping wedge surfaces arranged circumferentially at predetermined intervals. In this case, a plurality of inclined grooves may be arranged circumferentially at predetermined intervals in the tapered inner surface 23 and the tapered outer surface 27, and each wedge surface may be composed of a bottom wall of each inclined groove.

The advancing means 45 may be any means to press the rigid sleeve 21 upward (towards the leading end). Accordingly, the advancing means 45 may be attached between a lower portion of the rigid sleeve 21 and the housing 15, instead of being attached between the flange portion 28 of the rigid sleeve 21 and the housing 15. Further, the advancing means 45 may utilize a combination of pressurized fluid such as compressed air or pressurized oil and a piston, instead of or in addition to the exemplified elastic member such as rubber and a spring such as a coned disc spring.

It is preferable that cleaning means are provided for the respective clamping apparatuses 11, 12, and 13. Contact portions between the support surfaces 1a and the supported surface 2a, a fitting portion between the socket hole 3 and the clamping member 33, fitting portions between the balls 96 and the through holes 95, and respective fitting surfaces between the tapered inner surfaces 23 and the tapered outer surface 27 are cleaned by pressurized fluid such as compressed air.
In the clamping system, only one clamping apparatus 13 with only a locking functions may be installed, instead of the exemplified two. The clamping apparatus 13 is not limited to the exemplified structure, and may be another type of clamp.

The driving type of each of the clamping apparatuses 11, 12, and 13 may be a spring locking and hydraulic releasing type or a hydraulic locking and spring releasing type, instead of the exemplified hydraulic double-acting type.
Pressurized fluid used for locking or releasing may be gas such as compressed air, instead of the exemplified pressurized oil. Further, pressurized fluid for cleaning may be a gas such as nitrogen or liquid, instead of the exemplified compressed air.
Provided that lowering force of clamping during the locking drive is set to a sufficiently great value, it is possible to omit any clamping apparatus 13.
Further, in the clamping system, the first clamping apparatus 11 may be installed in plural number, and the second clamping apparatus 12 may be installed in plural number. Moreover, any one of both of the first clamping apparatus 11 and the second clamping apparatus 12 may be installed in plural number.

The direction in which a plurality of the clamping apparatus are arranged, may be circular or straight.
The support surface 1a may be provided on the base plate 4, instead of being provided on the upper surface of each boss 72 of the housing 15.
Further, the housing 15 and the base plate 4 may be integrally formed, instead of being separately formed.

The combination of the reference block and the movable block may be a combination of a table of a machine tool and a work pallet, a combination of a work pallet and a jig base, a combination of a jig base and a work piece, or a combination of a working jig such as a welding jig and a working article such as a work piece, instead of the exemplified combination of the base plate 4 and the work pallet 2. Further, the present invention is applicable to the positioning of a work piece, a tool and the like used in various processing machines such as a laser processing machine and an electric discharge processing machine.
Further, it is a matter of course that a clamping apparatus of the present invention can be used singly instead of in a plurality.

## Claims

1. A clamping apparatus which clamps a movable block (2) having a socket hole (3) to a reference block (1), comprising:
a centre hole (20) provided in the reference block (1) so as to face the socket hole (3);
a rigid sleeve (21) supported by the reference block (1) axially movably within a predetermined range and including an axially extending cylindrical hole (21a), a portion (25) of the sleeve (21) projecting further towards a leading end than the centre hole (20) and inserted into the socket hole (3);
an output member (48) inserted into the cylindrical hole (21a) of the rigid sleeve (21), the output member (48) being connected to a clamping member (33) disposed so as to be inserted into the socket hole (3);
an advancing means (45) for pressing the rigid sleeve (21) towards the leading end; and
a driving means (D) for moving the output member (48) towards a base end; the output member (48) moving the clamping member (33) towards the base end against the advancing means (45) and radially-outwardly for locking;
***characterised in that***
the clamping member (33) is provided on the projecting portion (25) of the sleeve (21);
the centre hole (20) has a tapered inner surface (23) narrowing towards the base end;
the rigid sleeve (21) includes a tapered outer surface (27) making a tapering engagement with the tapered inner surface (23) of the centre hole (20),
and the output member (48) makes the tapered outer surface (27) of the rigid sleeve (21) form a tapering engagement with the tapered inner surface (23) of the centre hole (20).

2. Clamping apparatus according to claim 1, wherein
a flange portion (28) projects radially-outwardly from the rigid sleeve (21) outside the centre hole (20), and the advancing means (45) is disposed between the flange portion (28) and the reference block (1).

3. Clamping apparatus according to claim 2, wherein
the advancing means (45) is composed of an annular elastic member

4. Clamping apparatus according to claim 1, wherein
a flange portion (28) projects radially outwardly from the rigid sleeve (21) outside the centre hole (20), and, in a state wherein the movable block (2) is placed on the flange portion (28), the advancing means (45) presses the movable block (2) to form a seating gap (E) between a supported surface (2a) of the movable block (2) and a support surface (1a) of the reference block (1), and a detection hole (74) for pressurized fluid for seating confirmation is provided in the support surface (1a).

5. Clamping apparatus according to claim 1, wherein
a supply port (76) for pressurized fluid for locking confirmation is provided in the reference block (1), the supply port (76) is connected in communication with an exterior space *via* a locking gap (F) between the tapered inner surface (23) and the tapered outer surface (27), and the communicative connection between the supply port (76) and the exterior space is shut off when the tapered outer surface (27) makes a tapering engagement with the tapered inner surface (23).

6. Clamping apparatus according to any one of claims 1 to 5, wherein the tapered outer surface (27) of the rigid sleeve (21) makes a tapering engagement with substantially the whole circumference of the tapered inner surface (23) of the centre hole (20) provided in the reference block (1).

7. Clamping apparatus according to any one of claims 1 to 5, wherein a pair of protruding portions (80, 80) radially facing each other is provided on at least one of an inner periphery of the centre hole (20) provided in the reference block (1) and an outer periphery of the rigid sleeve (21), and the tapered inner surface (23) or the tapered outer surface (27) is formed to the respective protruding portions (80), and movement-allowing spaces (81, 81) partitioned by the protruding portions (80, 80) are formed to radially face each other between the inner periphery of the centre hole (20) and the outer periphery of the rigid sleeve (21).

8. Clamping apparatus according to any one of claims 1 to 5, wherein the clamping member (33) is composed of a diametrically expandable and diametrically contractible collet, and the collet (33) makes a wedge-engagement with the projecting portion (25) of the rigid sleeve (21) from the leading end side.

9. Clamping apparatus according to any one of claims 1 to 5, wherein the clamping member (33) is composed of a plurality of balls (96) arranged circumferentially at intervals on a peripheral wall of the projecting portion (25) of the rigid sleeve (21), and the output member (48) changes the respective balls (96) to radially-outward engaging positions (X).

10. Clamping apparatus according to claim 9, wherein there are at least three balls (96).

11. A clamping system comprising at least one clamping apparatus according to any one of claims 1 to 5.

12. A clamping system comprising a clamping apparatus according to claim 6, and a clamping apparatus according to claim 7.

13. A clamping system comprising at least two of the clamping apparatus according to claim 7.

## Patentansprüche

1. Klemmvorrichtung, die einen beweglichen Block (2) mit einem Hülsenloch (3) an einen Bezugsblock (1) klemmt und die aufweist:
ein zentrales Loch (20), das im Bezugsblock (1) so vorgesehen ist, dass es dem Hülsenloch (3) zugewandt ist;
eine starre Hülse (21), die durch den Bezugsblock (1) axial beweglich innerhalb eines vorbestimmten Bereichs abgestützt ist und ein sich axial erstreckendes zylindrisches Loch (21a) aufweist, wobei ein Teil (25) der Hülse (21) weiter in Richtung eines Vorderendes vorsteht als das zentrale Loch (20) und in das Hülsenloch (3) eingesetzt wird;
ein Ausführungselement (48), das in das zylindrische Loch (21a) der starren Hülse (21) eingesetzt ist, wobei das Ausführungselement (48) mit einem Klemmelement (33) verbunden ist, das so angeordnet ist, dass es in das Hülsenloch (3) eingesetzt wird;
ein Vorschubmittel (45) zum Pressen der starren Hülse (21) in Richtung des Vorderendes; und
ein Antriebsmittel (D) zum Bewegen des Ausführungselements (48) in Richtung eines Basisendes; wobei das Ausführungselement (48) das Klemmelement (33) gegen das Vorschubmittel (45) in Richtung des Basisendes und radial nach außen zur Verriegelung bewegt;
**dadurch gekennzeichnet, dass**
das Klemmelement (33) am vorstehenden Teil (25) der Hülse (21) vorgesehen ist;
das zentrale Loch (20) eine verjüngte Innenfläche (23) aufweist, die sich in Richtung des Basisendes verschmälert;
die starre Hülse (21) eine verjüngte Außenfläche (27) aufweist, die einen Verjüngungseingriff mit der verjüngten Innenfläche (23) des zentralen Lochs (20) herstellt,
und das Ausführungselement (48) veranlasst, dass die verjüngte Außenfläche (27) der starren Hülse (21) einen Verjüngungseingriff mit der verjüngten Innenfläche (23) des zentralen Lochs (20) ausbildet.

2. Klemmvorrichtung nach Anspruch 1, wobei
ein Flanschteil (28) von der starren Hülse (21) außerhalb des zentralen Lochs (20) radial nach außen vorsteht und das Vorschubmittel (45) zwischen dem Flanschteil (28) und dem Bezugsblock (1) angeordnet ist.

3. Klemmvorrichtung nach Anspruch 2, wobei
das Vorschubmittel (45) aus einem ringförmigen elastischen Element besteht.

4. Klemmvorrichtung nach Anspruch 1, wobei
ein Flanschteil (28) von der starren Hülse (21) außerhalb des zentralen Lochs (20) radial nach außen vorsteht, und in einem Zustand, in dem der bewegliche Block (2) am Flanschteil (28) angeordnet ist, das Vorschubmittel (45) den beweglichen Block (2) presst, um einen Sitzspalt (E) zwischen einer abgestützten Oberfläche (2a) des beweglichen Blocks (2) und einer Stützoberfläche (1a) des Bezugsblocks (1) zu bilden, und ein Erfassungsloch (74) für Druckfluid für die Sitzbestätigung in der Stützoberfläche (1a) vorgesehen ist.

5. Klemmvorrichtung nach Anspruch 1, wobei
ein Zuführungskanal (76) für Druckfluid für die Verriegelungsbestätigung im Bezugsblock (1) vorgesehen ist, der Zuführungskanal (76) in Verbindung mit einem Außenraum über einen Verriegelungsspalt (F) zwischen der verjüngten Innenfläche (23) und der verjüngten Außenfläche (27) steht, und die kommunikative Verbindung zwischen dem Zuführungskanal (76) und dem Außenraum abgesperrt wird, wenn die verjüngte Außenfläche (27) einen Verjüngungseingriff mit der verjüngten Innenfläche (23) herstellt.

6. Klemmvorrichtung nach einem der Ansprüche 1 bis 5, wobei die verjüngte Außenfläche (27) der starren Hülse (21) einen Verjüngungseingriff mit im Wesentlichen dem ganzen Umfang der verjüngten Innenfläche (23) des zentralen Lochs (20) herstellt, das im Bezugsblock (1) vorgesehen ist.

7. Klemmvorrichtung nach einem der Ansprüche 1 bis 5, wobei ein Paar von vorstehenden Teilen (80, 80), die radial einander gegenüberliegen, an mindestens einem inneren Umfang des zentralen Lochs (20), das im Bezugsblock (1) vorgesehen ist, oder einem äußeren Umfang der starren Hülse (21) vorgesehen ist, und die verjüngte Innenfläche (23) oder die verjüngte Außenfläche (27) zu den jeweiligen vorstehenden Teilen (80) ausgebildet ist, und eine Bewegung zulassende Räume (81, 81), die durch die vorstehenden Teile (80, 80) unterteilt sind, so ausgebildet sind, dass sie zwischen dem inneren Umfang des zentralen Lochs (20) und dem äußeren Umfang der starren Hülse (21) radial einander gegenüberliegen.

8. Klemmvorrichtung nach einem der Ansprüche 1 bis 5, wobei das Klemmelement (33) aus einer diametral ausdehnbaren und diametral zusammenziehbaren Klemmhülse besteht und die Klemmhülse (33) einen Keileingriff mit dem vorstehenden Teil (25) der starren Hülse (21) von der Vorderendseite aus herstellt.

9. Klemmvorrichtung nach einem der Ansprüche 1 bis 5, wobei das Klemmelement (33) aus einer Vielzahl von Kugeln (96) besteht, die an einer Umfangswand des vorstehenden Teils (25) der starren Hülse (21) in Intervallen peripherisch angeordnet sind, und das Ausführungselement (48) die jeweiligen Kugeln (96) in radial äußere Eingriffspositionen (X) umstellt.

10. Klemmvorrichtung nach Anspruch 9, wobei mindestens drei Kugeln (96) vorhanden sind.

11. Klemmsystem mit mindestens einer Klemmvorrichtung nach einem der Ansprüche 1 bis 5.

12. Klemmsystem mit einer Klemmvorrichtung nach Anspruch 6 und einer Klemmvorrichtung nach Anspruch 7.

13. Klemmsystem mit mindestens zwei der Klemmvorrichtung nach Anspruch 7.

## Revendications

1. Appareil de serrage qui serre un bloc mobile (2) comportant un trou (3) de douille à un bloc (1) de référence, comprenant :
un trou central (20) situé dans le bloc (1) de référence, de manière à faire face au trou (3) de douille ;
une gaine rigide (21) soutenue par le bloc (1) de référence axialement et de manière mobile dans une gamme prédéterminée, et comprenant un trou cylindrique (21 a) à extension axiale, une partie (25) de la gaine (21) faisant saillie vers une extrémité avant, plus loin que le trou central (20), et insérée dans le trou (3) de douille ;
un élément (48) de sortie inséré dans le trou cylindrique (21a) de la gaine rigide (21), l'élément (48) de sortie étant relié à un élément (33) de serrage disposé de manière à être inséré dans le trou (3) de douille ;
un moyen (45) d'avancement permettant d'appuyer sur la gaine rigide (21) vers l'extrémité avant ; et
un moyen (D) d'entraînement permettant de déplacer l'élément (48) de sortie vers une extrémité de base ; l'élément (48) de sortie déplaçant l'élément (33) de serrage vers l'extrémité de base, contre le moyen (45) d'avancement et radialement vers l'extérieur pour le verrouillage ;
***caractérisé en ce que***
l'élément (33) de serrage est prévu sur la partie (25) faisant saillie de la gaine (21) ;
le trou central (20) présente une surface conique interne (23) se rétrécissant vers l'extrémité de base ;
1a gaine rigide (21) comprend une surface conique externe (27) réalisant un engagement conique avec la surface conique interne (23) du trou central (20),
et **en ce que** l'élément (48) de sortie permet à la surface externe (27) de la gaine rigide (21) de former un engagement conique avec la surface conique interne (23) du trou central (20).

2. Appareil de serrage selon la revendication 1, dans lequel
une partie (28) formant une bride fait saillie radialement vers l'extérieur à partir de la gaine rigide (21) en dehors du trou central (20), et où le moyen (45) d'avancement se trouve entre la partie (28) de bride et le bloc (1) de référence.

3. Appareil de serrage selon la revendication 2, dans lequel
le moyen (45) d'avancement se compose d'un élément élastique annulaire.

4. Appareil de serrage selon la revendication 1, dans lequel
une partie (28) formant une bride fait saillie radialement et vers l'extérieur à partir de la gaine rigide (21), en dehors du trou central (20), et dans un état où le bloc mobile (2) est placé sur la partie (28) formant une bride, le moyen (45) d'avancement appuie sur le bloc mobile (2) en formant un espace (E) pour siège entre une surface soutenue (2a) du bloc mobile (2) et une surface (1a) de soutien du bloc (1) de référence, et un trou (74) de détection destiné à un fluide sous pression, permettant la confirmation comme quoi le siège se trouve dans la surface (1a) de soutien.

5. Appareil de serrage selon la revendication 1, dans lequel
un orifice (76) d'alimentation destiné à du fluide sous pression, en vue d'une confirmation de verrouillage, se trouve dans le bloc (1) de référence, l'orifice (76) d'alimentation communiquant avec un espace externe par l'intermédiaire d'un espace (F) de verrouillage entre la surface conique interne (23) et la surface conique externe (27), et où le raccordement de télécommunication entre l'orifice (76) d'alimentation et l'espace externe est coupé quand la surface conique externe (27) produit un engagement conique avec la surface conique interne (23).

6. Appareil de serrage selon l'une quelconque des revendications 1 à 5, dans lequel la surface conique externe (27) de la gaine rigide (21) crée un engagement conique avec pratiquement l'ensemble de la circonférence de la surface conique interne (23) du trou central (20) situé dans le bloc (1) de référence.

7. Appareil de serrage selon l'une quelconque des revendications 1 à 5, dans lequel une paire de parties (80, 80) faisant saillie qui se font face radialement se trouve au niveau d'au moins soit à une périphérie interne du trou central (20) situé dans le bloc (1) de référence et une périphérie externe de la gaine rigide (21), et où la surface interne conique (23) ou la surface externe conique (27) est formée selon les parties respectives (80) faisant saillie, et où les espaces (81, 81) permettant un mouvement sont formés de manière à se faire face radialement entre la périphérie interne du trou central (20) et la périphérie externe de la gaine rigide (21).

8. Appareil de serrage selon l'une quelconque des revendications 1 à 5, dans lequel l'élément (33) de serrage se compose d'une pince de serrage dont le diamètre peut soit être étendu soit contracté, et où la pince de serrage (33) permet un engagement à coin avec la partie (25) faisant saillie de la gaine rigide (21) à partir du côté d'extrémité avant.

9. Appareil de serrage selon l'une quelconque des revendications 1 à 5, dans lequel l'élément (33) de serrage se compose d'une pluralité de billes (96) disposées circonférentiellement à des intervalles sur une paroi périphérique de la partie (25) faisant saillie de la gaine rigide (21), et où l'élément (48) de sortie fait passer les billes respectives (96) à des positions (X) d'engagement dirigées radialement vers l'extérieur.

10. Appareil de serrage selon la revendication 9, dans lequel on trouve au moins trois billes (96).

11. Système de serrage comprenant au moins un appareil de serrage selon l'une quelconque des revendications 1 à 5.

12. Système de serrage comprenant un appareil de serrage selon la revendication 6, et appareil de serrage selon la revendication 7.

13. Système de serrage comprenant au moins deux des appareils de serrage selon la revendication 7.
